# EUROPEAN PATENT APPLICATION

(11) **EP 1 785 347 A2**
(43) Date of publication of application: **16.05.2007**
(21) Application number: 06123905.9
(22) Date of filing: 13.11.2006
(51) Int. Cl.: B64C 13/50, G05D 1/08

(54) **Reconfigurable flight control surface actuation system and method**

(30) Priority: 14.11.2005 US 736823 P; 23.03.2006 US 387583
(71) Applicant: Honeywell International Inc., Morristown, NJ 07962 (US)
(72) Inventor: Hanlon, Casey, Queen Creek, AZ 85242 (US); Wingett, Paul T., Mesa, AZ 85202-7471 (US); Potter, Calvin C., Mesa, AZ 85206 (US)
(74) Representative: Haley, Stephen

(57) **Abstract**

A flight control surface actuation system (120), and the method implemented thereby, prevents an asymmetric secondary flight control surface deploy situation in the unlikely event one or more of the secondary flight control surfaces (128, 132, 134) becomes inoperable. The system (120) includes a control unit (121) that receives one or more signals representative of operability of each of the secondary flight control surfaces (128, 132, 134). In response to the signal, the control unit (121) determines the operability of each of the flight control surfaces (102-114) and, upon determining that a flight control surface (102-114) on one of the aircraft wings (101 - 1, 101-2) is inoperable, automatically moves, or inhibits movement of, one or more symmetric flight control surfaces (108-114) on the other aircraft wing (101- J, 101-2).

## Description

This application claims the benefit of U.S. Provisional Application No. 60/736,823 filed November 14,2005.

The present invention relates to flight surface actuation and, more particularly, to an automatically reconfigurable electric flight control surface actuation system.

Aircraft typically include a plurality of flight control surfaces that, when controllably positioned, guide the movement of the aircraft from one destination to another. The number and type of flight control surfaces included in an aircraft may vary, but typically include both primary flight control surfaces and secondary flight control surfaces. The primary flight control surfaces are those that are used to control aircraft movement in the pitch, yaw, and roll axes, and the secondary flight control surfaces are those that are used to influence the lift or drag (or both) of the aircraft-Although some aircraft may include additional control surfaces, the primary flight control surfaces typically include a pair of elevators, a rudder, and a pair of ailerons, and the secondary flight control surfaces typically include a plurality of flaps and slats.

The positions of the aircraft flight control surfaces are typically controlled using a flight control surface actuation system. The flight control surface actuation system, in response to position commands that originate from either the flight crew or an aircraft autopilot, moves the aircraft flight control surfaces to the commanded positions. In most instances, this movement, is effected via actuators that are coupled to the flight control surfaces. Though unlikely, it is postulated that a flight control surface actuator could become inoperable. Thus, some flight control surface actuation systems are implemented with a plurality of actuators coupled to a single flight control surface.

In many flight control surface actuation systems, some of the actuators are hydraulically powered. Some flight control surface actuation systems have been implemented, however, with other types of actuators, including pneumatic and electromechanical actuators. Additionally, in some flight control surface actuation systems, a portion of the actuators, such as those that are used to drive the flaps and slats, are driven via one or more central drive units and mechanical drive trains. These central drive units are typically hydraulically or electrically powered devices.

Although the flight control surface actuation systems that include hydraulically powered or pneumatically powered actuators are generally safe, reliable, and robust, these systems do suffer certain drawbacks. Namely, these systems can be relatively complex, can involve the use of numerous parts, can be relatively heavy, and may not be easily implemented to provide sufficient redundancy, fault isolation, and/or system monitoring. The flight control surface actuation systems that include electromechanical actuators also suffer certain drawbacks. For example, many of these systems also do not provide sufficient redundancy, fault isolation, and/or system monitoring. The lack of sufficient redundancy, fault isolation, and/or system monitoring can lead to undesired operational configurations in the event of an inoperable flight control surface. For example, if a single flight control surface becomes inoperable, the remaining surfaces may become inoperable or an asymmetric flight control surface deploy situation may occur.

Hence, there is a need for a flight control surface actuation system and method that provides sufficient redundancy, fault isolation, and/or system monitoring to prevent undesired operational configurations, such as an asymmetric flight control surface deploy situation, in the event of an inoperable flight control surface. The present invention addresses one or more of these needs.

The present invention provides a system and method for preventing undesired operational configurations, such as an asymmetric flight control surface deploy situation, in the event of an inoperable flight control surface. The present invention addresses one or more of these needs.

In one embodiment, and by way of example only, a flight control surface actuation system includes a plurality of flight control surface actuators, and a control unit. Each flight control surface actuator is configured to be coupled to a secondary flight control surface on either a first aircraft wing or a second aircraft wing. Each flight control surface actuator is coupled to receive power and is operable, upon receipt thereof, to move its associated secondary flight control surface to a commanded position. The control unit is coupled to receive one or more signals representative of operability of each of the secondary flight control surfaces and is operable, in response thereto, to determine operability of each of the flight control surfaces and upon determining that a flight control surface on one of the first or second aircraft wings is inoperable, to automatically selectively supply or inhibit power to one or more of the flight control surface actuator that are adapted to be coupled to a secondary flight control surface on one of the second or first aircraft wings, respectively, to prevent an asymmetric flight control surface deploy condition.

In yet another exemplary embodiment, in an aircraft having at least first and second aircraft wings, wherein the first aircraft wing has a plurality of secondary flight control surfaces that are each symmetric to a secondary flight control surface on the second wing, and each flight control surface on the first and second aircraft wings has one or more flight control surface actuators coupled thereto, a method of preventing an asymmetric flight control surface deploy condition includes determining operability of each of the plurality of secondary flight control surfaces. If it is determined that a secondary flight control surface on one of the first or second aircraft wings is inoperable, one or more of the symmetric secondary flight control surface on one of the second or first aircraft wings, respectively, is selectively moved, or inhibited from moving, to thereby prevent the asymmetric flight control surface deploy condition.

Other independent features and advantages of the preferred flight control system and method will become apparent from the following detailed description, taken in conjunction with the accompanying drawings which illustrate, by way of example, the principles of the invention.

FIG. 1 is a schematic diagram of a portion of an exemplary embodiment of an aircraft depicting an exemplary flight control surface actuation system according one embodiment of the present invention; and

FIG. 2 is a flowchart depicting an exemplary methodology implemented by the exemplary system of FIG. 1, according to an embodiment of the present invention.

The following detailed description is merely exemplary in nature and is not intended to limit the invention or the application and uses of the invention. Furthermore, there is no intention to be bound by any theory presented in the preceding background or the following detailed description.

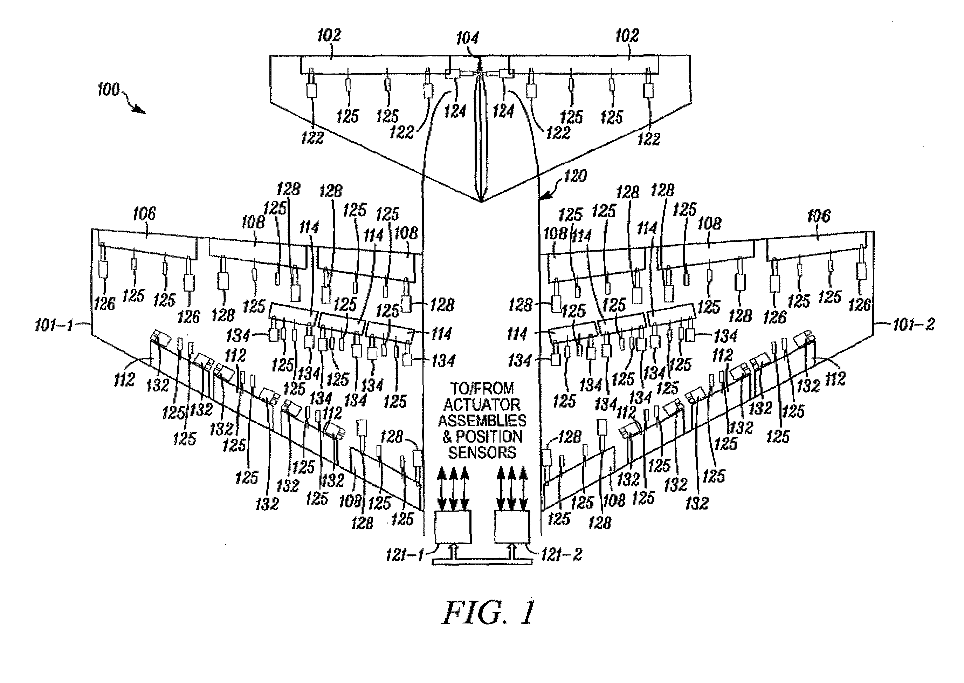

Turning first to FIG. 1, a schematic diagram of a portion of an exemplary aircraft and a portion of an exemplary flight control surface actuation system is shown. In the illustrated embodiment, the aircraft 100 includes first and second aircraft wings 101-1 and 101-2, respectively, a pair of elevators 102, a rudder 104, and a pair of ailerons 106, which are the primary flight control surfaces, and a plurality of flaps 108, slats 112, and spoilers 114, which are the secondary flight control surfaces. The primary flight control surfaces 102-106 control aircraft movements about the aircraft pitch, yaw, and roll axes. Specifically, the elevators 102 are used to control aircraft movement about the pitch axis, the rudder 104 is used to control aircraft movement about the yaw axis, and the ailerons 106 control aircraft movement about the roll axis. It is noted, however, that aircraft movement about the yaw axis can also be achieved either by varying the thrust levels from the engines on opposing sides of the aircraft 100. it will additionally be appreciated that the aircraft 100 could include horizontal stabilizers (not shown).

The secondary control surfaces 108-114, which are all disposed on the first and second aircraft wings 101-1, 101-2, influence the lift and drag of the aircraft 100. For example, during aircraft take-off and landing operations, when increased lift is desirable, the flaps 108 and slats 112 may be moved from retracted positions to extended positions. In the extended position, the flaps 108 increase both lift and drag, and enable the aircraft 100 to descend more steeply for a given airspeed, and also enable the aircraft 100 get airborne over a shorter distance. The slats 112, in the extended position, increase lift, and are typically used in conjunction with the flaps 108. The spoilers 114, on the other hand, reduce lift and when moved from retracted positions to extended positions, which is typically done during aircraft landing operations, may be used as air brakes to assist in slowing the aircraft 100.

The flight control surfaces 102-114 are moved to deployed positions via a flight control surface actuation system 120. The flight control surface actuation system 120 includes one or more actuator control units 121, a plurality of primary flight control surface actuators, which include elevator actuators 122, rudder actuators 124, and aileron actuators 126, and a plurality of secondary control surface actuators, which include flap actuators 128, slat actuators 132, and spoiler actuators 134. It will be appreciated that the number of actuator control units 121 may vary. However, in the depicted embodiment, the flight control surface actuation system 120 includes two multi-channel actuator control units 121 (121-1, 121-2).

The flight control surface actuation system 120 may be implemented using various numbers and types of flight control surface actuators 122-134. In addition, the number and type of flight control surface actuators 122-134 per flight control surface 102-114 may be varied. In the depicted embodiment, however, the system 120 is implemented such that two primary flight control surface actuators 122-126 are coupled to each primary flight control surface 102-16, and two secondary control surface actuators 128-134 are coupled to each secondary control surface 108-114, Moreover, each of the primary surface actuators 122-126, each of the flap actuators 128, and each of the spoiler actuators 134 are preferably a linear-type actuator, such as, for example, a ballscrew actuator, and each of the slat actuators 132 are preferably a rotary-type actuator. It will be appreciated that this number and type of flight control surface actuators 122-134 are merely exemplary of a particular embodiment, and that other numbers and types of actuators 122-134 could also be used.

The flight control surface actuation system 120 additionally includes a plurality of control surface position sensors 125. The control surface position sensors 125 sense the positions of the flight control surfaces 102-114 and supply control surface position feedback signals representative thereof. It will be appreciated that the control surface position sensors 125 may be implemented using any one of numerous types of sensors including, for example, linear variable differential transformers (LVDTs), rotary variable differential transformers (RVDTs), Hall effect sensors, resolvers, or potentiometers, just to name a few. In the depicted embodiment, a pair of control surface position sensors 125 is coupled to each of the flight control surfaces 102-114. It will be appreciated, however, that this is merely exemplary of a particular embodiment and that more or less than two position sensors 125 could be coupled to each flight control surface 102-114. Moreover, in other embodiments, the flight control surface actuation system 120 could be implemented without some, or all, of the control surface position sensors 125.

The flight control surface actuators 122-134 are each driven by one or more non-illustrated motors. Although the motors may be either electric, pneumatic, or hydraulic motors, in a particular preferred embodiment the motors are electric motors. Moreover, although various numbers of motors could be associated with each actuator, preferably two motors are associated with each flight control surface actuator 122-134 such that either, or both, actuator motors can drive the associated actuator 122-134. The actuator motors are selectively energized and, upon being energized, rotate in one direction or another, to thereby supply a drive force to the associated actuator 122-134. The actuators 122-134 are each coupled to receive the drive force supplied from its associated actuator motors and, depending on the direction in which the actuator motors rotate, move to commanded positions, to thereby move the primary and secondary flight control surfaces 102-114. It will be appreciated that the actuator motors may be implemented as any one of numerous types of AC or DC motors, but in a preferred embodiment the actuator motors are preferably implemented as DC motors, and most preferably brushless DC motors.

The system 120 and actuator control units 121-1, 121-2 may be implemented according to any one of numerous operational configurations. For example, the system 120 could be configured such that one of the control units 121-1 (121-2) is an active control unit, while the other control unit 121-2 (121-1) is in an inactive (or standby) mode. Alternatively, the system 120 could be configured such that both control units 121-1, 121-2 are active and controlling all, or selected ones, of the flight control surface actuator assemblies 122-134. No matter the specific configuration, each control unit 121-1, 121-2, when active, receives flight control surface position commands from one or more non-illustrated external systems, such as one or more flight control computers or pilot controls. In response to the flight control surface position commands, the active control units 121-1, 121-2 energize the appropriate flight control surface actuator assemblies 122-134. The flight control surface actuator assemblies 122-134, in response to being energized, move the appropriate flight control surfaces 102-114 to the commanded flight control surface position.

The control units 121-1, 121-2 may also be configured receive one or more monitor signals that are representative of secondary flight control surface actuator assembly 108-114 operability. The control units 121-1, 121-2, in response to these monitor signals, determine the operability of the secondary flight control surfaces 108-114. If one or both control units 121-1, 121-2 determines that a secondary flight control surface 108-114 is partially or fully inoperable, it automatically compensates the system 120 to prevent an asymmetric deploy configuration. It will be appreciated that a partially or fully inoperable secondary flight control surface may be caused by a jam or other fault associated with the flight control surface 108-114 itself, or by one or more partially or fully inoperable secondary flight control surface actuator assemblies 128.134. It will additionally be appreciated that the monitor signals that the control units 121-1, 121-2 receive may be supplied directly from the flight control surfaces actuator assemblies 108-114. In the depicted embodiment, however, the monitor signals are supplied from the secondary flight control surface position sensors 125.

More specifically, at least in the depicted embodiment, the control units 121, in response to the position signals supplied from the secondary flight control surface position sensors 125, determines the status and position of each secondary flight control surface 108-114. If one or both of the control units 121-1,121-2 determines that the system 120 is in, or would be in, an asymmetric deploy condition due to one or more of the secondary flight control surfaces 108-114 on one of the aircraft wings 101-1 (101-2) becoming inoperable, one or both control units 121-1, 121-1 either supplies actuator position commands to, or inhibits actuator position commands from being supplied to, the symmetric secondary flight control surface actuators 128-134 on the other aircraft wing 101-2 (101-1). Thus, the symmetric secondary flight control surface 108-114 is either moved to, or remains in, the same position as the inoperable secondary flight control surface 108-114.

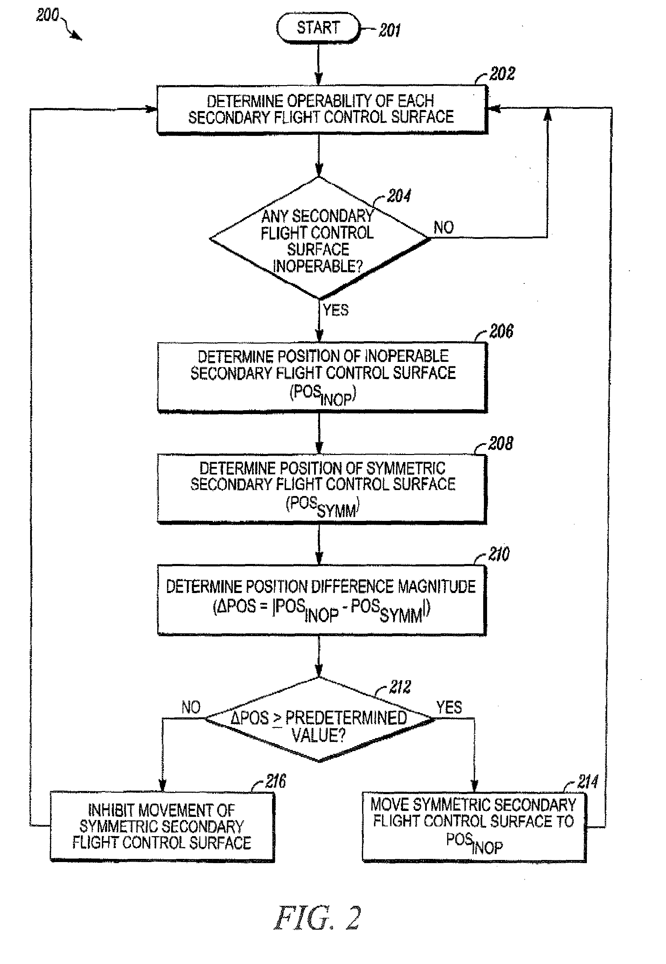

It will be appreciated that the control units 121-1, 121-2 may implement the above-described functionality via hardware, firmware, software, or various combinations thereof. Preferably, however, the control units 121-1, 121-2 implement this functionality via software. It will additionally be appreciated that one or both of the actuator control units 121-1, 121-2 could be formed as an integral part of, and/or one or more of its above-described functions could be implemented as within, the one or more flight control computers. In any case, the process that is implemented by the control units 121-1,121-2 (either separately or as part of one or more flight control computers) is depicted in flowchart form in FIG. 2 and, for completeness of explanation, will now be described. In doing so, it should be understood that the parenthetical references in the following description correspond to the reference numerals used in the depicted flowchart.

Turning now to FIG. 2, it is seen that, upon system 100 initiation (201), the operable control unit 121 (or control units) determines the operability of each of the secondary flight control surfaces 108-114 (202, 204). As noted above, this can be accomplished using any one of numerous techniques, but is preferably accomplished via the position signals received from the secondary flight control surface position sensors 125. If a secondary flight control surface 108-114 is determined to be inoperable, the control unit 12] (or units) then determines the position of the inoperable secondary flight control surface 108-114 (206) and the position of the symmetric secondary flight control surface 108-114 on the opposite aircraft wing 101 (208).

After the positions of the inoperable and symmetric secondary flight control surfaces 108-114 are determined, a magnitude difference between the two positions is determined (210), and compared to a predetermined value (212). If the magnitude difference equals or exceeds the predetermined value, then the symmetric secondary flight control surface 108-114 is moved to a position that is at least substantially equal to the position of the inoperable secondary flight control surface 108-114 (214). If, however, the magnitude difference is less than the predetermined value, then the symmetric secondary flight control surface 108-114 is already in a position that is at least substantially equal to the position of the inoperable flight control surface 108-114, and need not be moved. In this instance, further movement of the symmetric flight control surface 108-114 is inhibited (216) by, for example, inhibiting the supply of actuator position commands to the associated actuator 128-134. However, the remaining operable secondary flight control surfaces 108-134 may be normally operated.

This flight control system 100 described herein, and the methodology 200 that is implemented thereby, prevents or at least inhibits an asymmetric deploy condition of the secondary flight control surfaces 108-114 without adversely affecting aircraft handling.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A flight control surface actuation system (120), comprising;
a plurality of flight control surface actuators (128, 132, 134), each flight control surface actuator (128,132,134) configured to couple to a secondary flight control surface (108, 112, 114) on either a first aircraft wing (101-1) or a second aircraft wing (101-2), each flight control surface actuator (108,112,114) coupled to receive power and operable, upon receipt thereof, to move its associated secondary flight control surface (108, 112, 114) to a commanded position; and
a control unit (121) configured to receive one or more signals representative of operability of each of the secondary flight control surfaces (108,112,114) and operable, in response thereto:
(i) to determine the operability of each of the flight control surfaces (128, 132, 134) and,
(ii) upon determining that a flight control surface (128,132,134) on one of the first or second aircraft wings (101-1, 101-2) is inoperable, to automatically selectively supply or inhibit power to one or more of the flight control surface actuators (108, 112, 114) that are adapted to be coupled to a secondary flight control surface (128, 132, 134) on one of the second or first aircraft wings (101-2, 101-1), respectively, to prevent an asymmetric flight control surface deploy condition.

2. The system (120) of Claim 1, further comprising:
a plurality of flight control surface position sensors (125), each flight control surface position sensor (125) configured to couple to one of the secondary flight control surfaces (128, 132, 134) and operable to (i) sense a position thereof and (ii) supply a flight control surface position signal representative thereof to the control unit (121),
wherein:
the flight control surface position signals are the one or more signals representative of the operability of each of the secondary flight control surfaces (128, 132, 134); and
each flight control surface position sensor (125) comprises an actuator position sensor operable to sense a position of a flight control surface actuator (122. 124, 126) and, in response, supply the flight control surface position signal representative thereof.

3. The system (120) of Claim 1, further comprising:
a plurality of flight control surface position sensors (125), each flight control surface position sensor (125) configured to couple to one of the secondary flight control surfaces (128, 132, 134) and operable to (i) sense a position thereof and (ii) supply a flight control surface position signal representative thereof to the control unit (121),
wherein:
the flight control surface position signals are the one or more signals representative of the operability of each of the secondary flight control surfaces (128, 132, 134); and
the first aircraft wing (101-1) includes a plurality of secondary flight control surfaces (128, 132, 134); and
the second aircraft wing (101-2) includes a plurality of secondary flight control surfaces (128, 132, 134) that are each symmetric to one of the plurality of secondary flight control surfaces (128, 132, 134) on the first wing (101-1).

4. The system (120) of Claim 3, wherein the control unit (121), upon determining that a flight control surface on the first or second aircraft wing (101-1, 101-2) is inoperable, automatically selectively supplies or inhibits power to a flight control surface actuator (108, 112, 114) that is adapted to be coupled to the symmetric secondary flight control surface (128, 132, 134) on the second or first aircraft wing (101-2, 101-1), respectively, to thereby prevent the asymmetric flight control surface deploy condition.

5. The system (120) of Claim 3, wherein the control unit (121) is further operable, upon receipt of the flight control surface position signals, to:
(i) compare positions of the inoperable flight control surface and the symmetric flight control surface to determine a position difference magnitude;
(ii) if the determined position difference magnitude is at least a predetermined value, automatically supplying power to the flight control surface actuator configured to couple to the symmetric secondary flight control surface to move the symmetric secondary flight control surface to a position that is at least substantially equal to the position of the inoperable secondary flight control surface; and
(iii) if the determined position difference magnitude is less than a predetermined value, automatically inhibiting power to the flight control surface actuator configured to couple to the symmetric secondary flight control surface.

6. The system (120) of Claim 1, wherein the control unit (121) is adapted to receive flight control surface position commands and is further operable, in response the received flight control surface position commands, to supply the power to the flight control surface actuators.

7. The system (120) of Claim, further comprising:
a plurality of motor resolvers, each motor resolver coupled to one of the electric motors and operable to sense a rotational position thereof and supply a motor rotational position signal representative thereof,
wherein:
selected ones of the plurality of flight control surface actuators are flap actuators (128) that are each adapted to couple to a flap (108);
selected ones of the plurality of flight control surface actuators are slat actuators that are each adapted to couple to a slat (112);
at least some of the flap actuators (128) are linear electromechanical actuators having an electric motor;
at least some of the slat actuators (132) are rotary electromechanical actuators having an electric motor; and
each of the electric motors is a brushless DC motor, and the control unit (121) is coupled to receive the motor rotational position signals and is further operable, in response thereto, to supply the actuator position commands to the brushless DC motors in a manner that commutates the brushless DC motors.

8. In an aircraft having at least first and second aircraft wings (101-1,101-2), the first aircraft wing (101-1) having a plurality of secondary flight control surfaces (128, 132, 134) that are each symmetric to a secondary flight control surface (128, 132, 134) on the second wing (101-2), and each flight control surface (12 8, 13 2, 134) on the first and second aircraft wings (101-1, 101-2) having one or more flight control surface actuators (128,132,134) coupled thereto, a method of preventing an asymmetric flight control surface deploy condition, comprising the steps of:
determining operability of each of the plurality of secondary flight control surfaces (128, 132, 134); and
if it is determined that a secondary flight control surface (128, 132, 134) on one of the first or second aircraft wings (101-1,101-2) is inoperable, selectively moving, or inhibiting movement of, the symmetric secondary flight control surface (128, 132,134) on one of the second or first aircraft wings (101-2, 101-1), respectively, to thereby prevent the asymmetric flight control surface deploy condition.

9. The method of Claim 8, further comprising:
determining a position of the inoperable secondary flight control surface;
determining a position of the symmetric secondary flight control surface;
comparing the determined positions to determine a position difference magnitude; and
if the determined position difference magnitude is at least a predetermined value, automatically moving the symmetric secondary flight control surface to a position that is at least substantially equal to the position of the inoperable flight control surface.

10. The method of Claim 8, further comprising:
determining a position of the inoperable secondary flight control surface;
determining a position of the symmetric secondary flight control surface;
comparing the determined positions to determine a position difference magnitude; and
if the determined position difference magnitude is less than a predetermined value, automatically inhibiting the movement the symmetric secondary flight control surface.
